(19)

Europäisches
Patentamt
European
Patent Office
Office européen
des brevets

(11)     EP 2 583 934 B1

(12)     **EUROPEAN PATENT SPECIFICATION**

(45) Date of publication and mention
of the grant of the patent:
**12.10.2016   Bulletin 2016/41**

(51) Int Cl.:
**B67D 1/04** *(2006.01)*       **B67D 1/08** *(2006.01)*
**B65D 77/06** *(2006.01)*

(21) Application number: **12158643.2**

(22) Date of filing: **08.03.2012**

(54) **Reusable beer keg**

Wiederverwendbares Bierfass

Fût de bière réutilisable

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.10.2011   US 201113317556**

(43) Date of publication of application:
**24.04.2013   Bulletin 2013/17**

(73) Proprietors:
• **Bates, Thomas W.**
  **Kila, MT 59920 (US)**
• **Morgan, Dan**
  **Vacaville, CA 95687 (US)**
• **Ross, Leslie W.**
  **San Rafael CA 94901 (US)**

(72) Inventors:
• **Bates, Thomas W.**
  **Kila, MT 59920 (US)**
• **Morgan, Dan**
  **Vacaville, CA 95687 (US)**
• **Ross, Leslie W.**
  **San Rafael CA 94901 (US)**

(74) Representative: **Boult Wade Tennant**
**Verulam Gardens**
**70 Gray's Inn Road**
**London WC1X 8BT (GB)**

(56) References cited:
**EP-A1- 2 258 629      WO-A2-2004/050541
FR-A1- 2 952 357**

**Description**

**Technical Field**

This application relates to pressurized beer containers or kegs and, specifically, to pressurized beer containers that are designed to be returned to a brewery or bottler for cleaning and refilling.

**Background**

Most breweries presently supply beer to commercial establishments, like restaurants and bars, in stainless steel kegs. In the United States a *full keg* is a 58,6 l (15.5 gallon) U.S. gallon barrel, sometimes referred to as a half-barrel. In European countries the keg most comparable to the US *full keg* is a keg having a size of 50 liters (13.21 gal). Normally the keg will have long dispenser-like tube extending from the top of the keg to just above the keg's inside bottom surface. In addition, a pressurizing valve is typically connected to the top of the keg and dispenser tube and is used with a tap valve to pressurize the beer within the keg, causing the beer to flow from the bottom of the keg and up through the dispenser tube and tap, and into a serving container.

Stainless steel beer kegs are expensive to manufacture and are intended to be returned by the commercial establishment to the brewery for cleaning and refilling. Repeatedly cleaning the stainless steel kegs is particularly expensive due to the substantial amounts of water that must be used and sent to a treatment facility. An additional expense arises from that fact that after the same stainless steel keg has been returned to the brewery about 20 times, the keg must be reworked to remove dents that would otherwise reduce the internal volume to an unacceptable degree. Another well recognized expense to the brewery industry is that a large percentage of stainless steel kegs are never returned due to theft, causing the brewery to incur substantial economic loses. Several attempts have been made to reduce these expenses by producing relatively inexpensive plastic and/or composite beer kegs that are not returned to the brewery, but are either disposable or can be sent to a plastic recycling facility for grinding into raw material for use in the production of other plastic articles. (See for example, US Pat. No. 6,666,358). In this regard, although disposable kegs certainly eliminate the economic costs associate with the theft of stainless steel kegs as well as the cost of cleaning the kegs, disposable kegs have other costs associated with having to dispose of the kegs and the contamination of the environment, which are costs that are not associated with the use of stainless steel kegs Further, even if the kegs are sent to a plastic recycling facility, there are the considerable costs associated with collecting, sorting, cleaning and grinding the kegs into a reusable form that can then be used to manufacture other plastic products.

Accordingly, what is needed is a reusable beer keg that is substantially less expensive to manufacture than a stainless steel keg but can be returned and refilled by the brewer just like a stainless steel keg but, unlike a stainless steel keg, does not need to be cleaned. In addition, the reusable beer keg should be produced in a manner that would make it less desirable to persons who might be inclined to steal it. As will be apparent from the description that follows, the reusable beer keg of the present invention satisfies these needs and provides other unique and desirable feature.

A reusable beer keg according to the preamble of claim 1 is known from FR-A-2 952 357.

**Summary of the Invention**

A reusable beer keg is disclosed according to claim 1.

A method for using a reusable beer keg is also disclosed, comprising the steps of:

A method for using a reusable beer keg according toc laim 1, comprising the steps of:

a) providing a hollow beer keg body with the keg body having a keg opening for providing access to the interior of the keg body;

b) assembling a dispenser tube assembly by attaching a dispenser valve to an end of a dispenser tube, disposing an opposite end of the dispenser tube through an opening of a disposable bladder, and releasably attaching said other end of said dispenser tube to the disposable bladder;

c) disposing the dispenser tube assembly through the keg body opening and releasably attaching the dispenser valve to the keg opening, thereby creating the reusable beer keg;

d) dispensing beer into the interior of the bladder;

e) dispensing pressurized gas into the interior of the bladder, causing the beer to flow up through the dispenser tube;

f) disassembling the reusable beer keg after it has dispensed the beer by releasing the dispenser valve from its engagement with the keg body, removing the dispenser tube assembly from the interior of the keg body, and releasing the bladder from its engagement with the dispenser valve;

g) disposing of the disposable bladder;

h) cleaning the dispenser valve and dispenser tube; and

i) reassembling the reusable beer keg as in steps (b) and (c) above by reusing the keg body, cleaned dispenser valve and dispenser tube, and using a new disposable bladder.

Brief Description of the Drawings

FIG. 1 is a perspective view of the reusable beer keg with the dispenser tube assembly partially disposed into the interior of the keg body.

FIG. 2 is a perspective view of the dispenser tube assembly.

FIG. 3A is a perspective view of the dispenser tube and dispenser valve and FIG. 3B is partial cross-sectional plan view of the dispenser tube and dispenser valve.

FIG.'s 4A through 4D illustrate the disposable bladder.

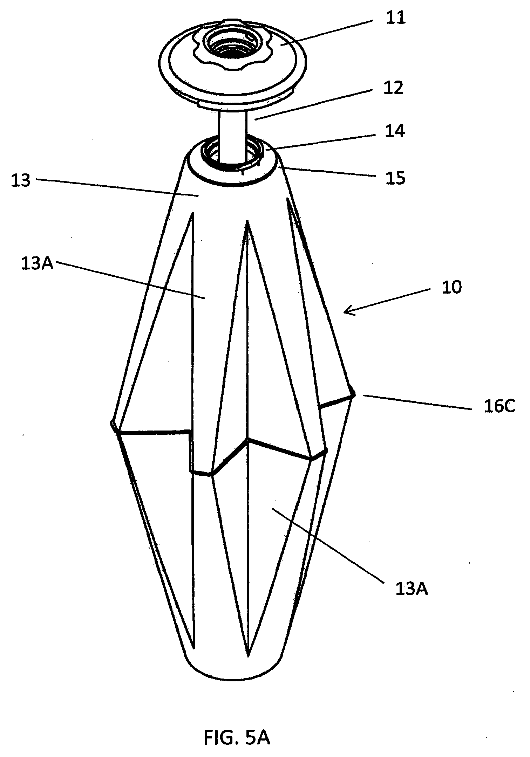

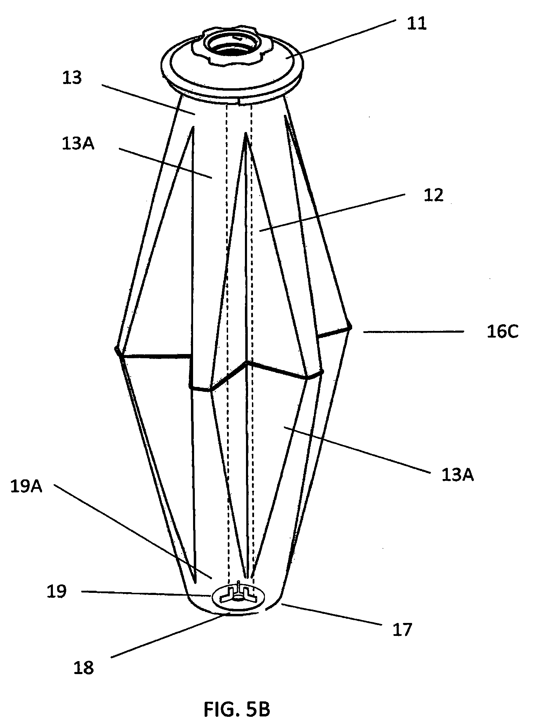

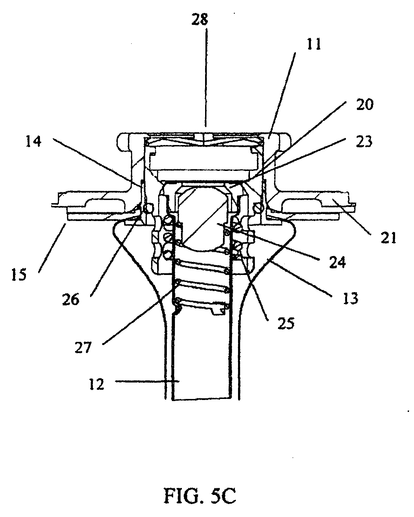

FIG. 5A is a perspective illustration of the dispenser tube and dispenser valve, with the dispenser tube partially disposed through the bladder fitment and extending into the interior of the bladder; FIG. 5B is another perspective illustration of the dispenser tube and dispenser valve, with the dispenser tube (shown in dashed lines) completely disposed through the bladder fitment, and with the bottom end of the dispenser tube releasably attached to a centering fitment (shown in solid lines for visual clarity) disposed within the bladder; and FIG. 5C is a partial cross-sectional plan view of the dispenser tube assembly.

FIG. 6A is a partial cross-section of a front perspective view of the reusable beer keg with the dispenser tube assembly releasably connected to the keg body; and FIG.'s 6B and 6C are partial perspective views of a top portion of the keg body, illustrating the dispenser valve in an unlocked and locked position, respectively.

FIG. 7 is the same illustration as in FIG. 6A but further illustrates that the bladder has expanded so as to contact the inner surface of the keg body when the bladder is full of beer.

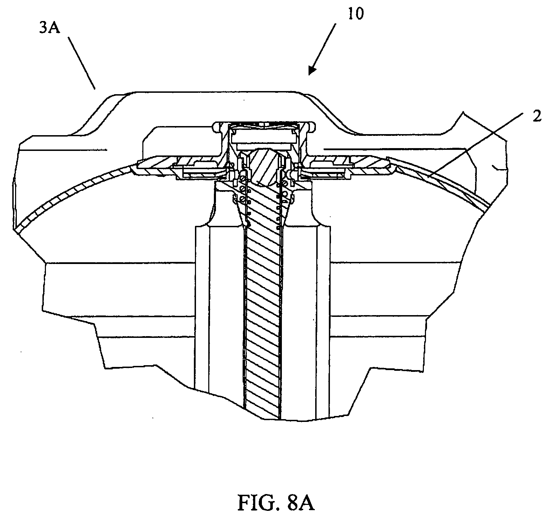

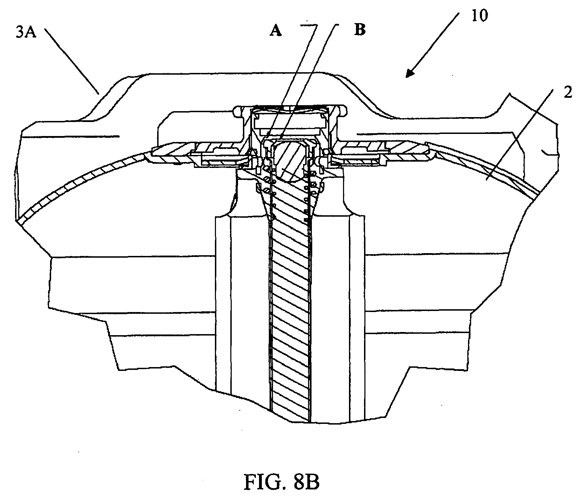

FIG. 8A is a partial cross-section of the dispenser tube assembly with the dispenser valve closed and FIG. 8B illustrates the dispenser tube assembly with the dispenser valve open.

FIG. 9A is a side view of two reusable beer kegs, with one keg stacked above the other keg and the kegs secured together with a locking strap; and FIG. 9B is a partial cross-sectional diagram of the beer kegs illustrated in FIG 9A further illustrating the arcuate surfaces formed on the bottom surface of one keg and on top surface of the other keg.

Detailed Description of Preferred Embodiments

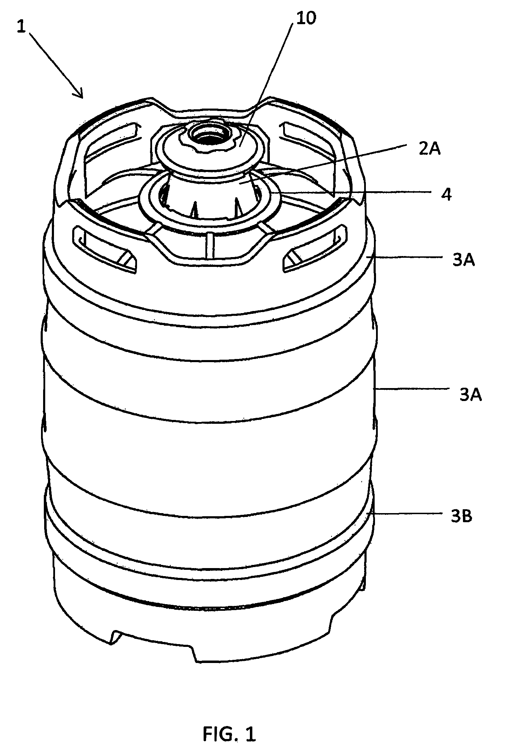

The reusable beer keg 1 of the present invention is generally illustrated in the perspective view of FIG.1. Beer keg 1 has a generally cylindrical shape, with arcuate shaped ends, and is intended to approximately conform to the size and shape of commonly used stainless steel beer kegs, and specifically to either a 58,6 l (15.5 U.S. gal) or a 50L European stainless steel keg. In a preferred embodiment, beer keg 1 comprises a hollow one-piece keg body 2 that is molded from a plastic material utilizing a single or unitary mold process in order to form the one-piece keg body in which the composition of the plastic material forms a continuous and homogenous unit. Preferably, the plastic material can be a polyethylene elastomer or a polyurethane elastomer. For example, an acceptable plastic can be TADCO 37452, a Shore D56 polyurethane rotomolding product. In this embodiment, the molded keg body 2 has an inside diameter of approximately 16 inches and an inside height of approximately 24 inches. Preferably, keg body 2 has a nominal wall thickness of approximately 0.2 inches; however, the wall thickness can be increased in at least two areas where additional structural integrity is needed. First, the keg wall thickness can be increased preferably by providing two integral circumferential bands that extend around the perimeter of keg body 2 and are approximately 1cm (0.4 inches) thick, with the bands being formed during the unitary molding process of keg body 2. Second, the thickness of the top and bottom sections of keg body 2 can be increased preferably by providing eight elongate members that extend radially within the molded top and bottom portions of keg body 2, with each elongate member being approximately 1cm (0.4 inches) thick and with the members also being formed during the unitary molding process of keg body 2. Alternatively, the keg body can be molded into two sections: a lower body section and a lid section, with the two sections adapted to be connected so as to form the keg body. Keg body **2** has an annular and concentrically positioned opening **2A** through its top end that provides access to the interior of the hollow keg body. Keg body **2** also includes a top cylindrical member **3A** that is attached to the top outside surface of keg body **2** and surrounds annular opening **2A.** The keg body **2** further includes a bottom cylindrical member **3B** that is attached to the bottom outside surface of keg body **2.** Preferably, top and bottom cylindrical members, **3A** and **3B,** are made of the same plastic material that is used to mold keg body 2 and each cylindrical member is attached to keg body **2** by gluing the member to the outside surface of the body. A valve attachment collar **4** is attached, preferably by gluing, to the outside surface of the top portion of keg body **2** and is positioned such that the circularly shaped opening within the collar is positioned above and concentrically with keg opening **2A.** The figure also illustrates a dispenser tube assembly **10** that has been partially disposed into the interior of the keg body **2** by passing the assembly through valve attachment collar **4** and keg opening **2A.**

Although the preferred embodiment of beer keg **1** is described herein to conform to the size and shape of commonly used stainless steel beer kegs, and specifically to either a 58,6l (15.5 U.S. gal) or a 50L European stainless steel keg, the present disclosure is also applicable to other embodiments with beer kegs having different sizes, shapes and volumetric capacities.

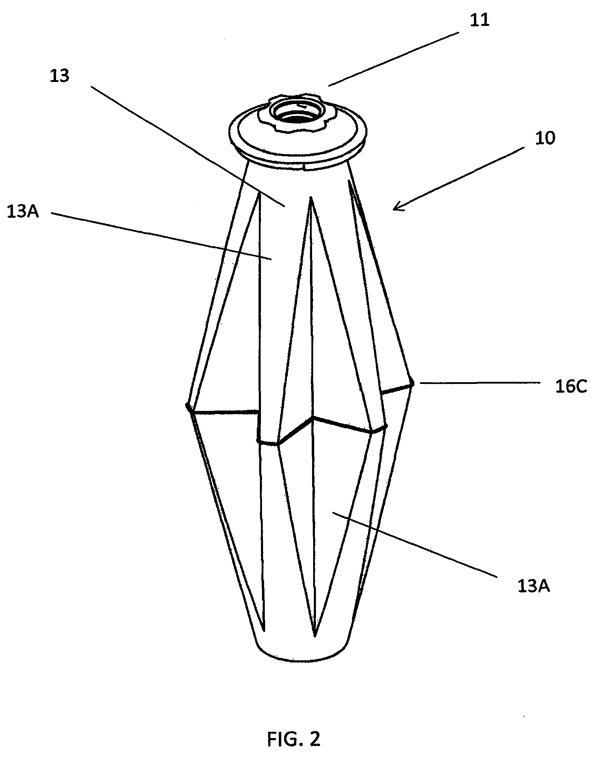

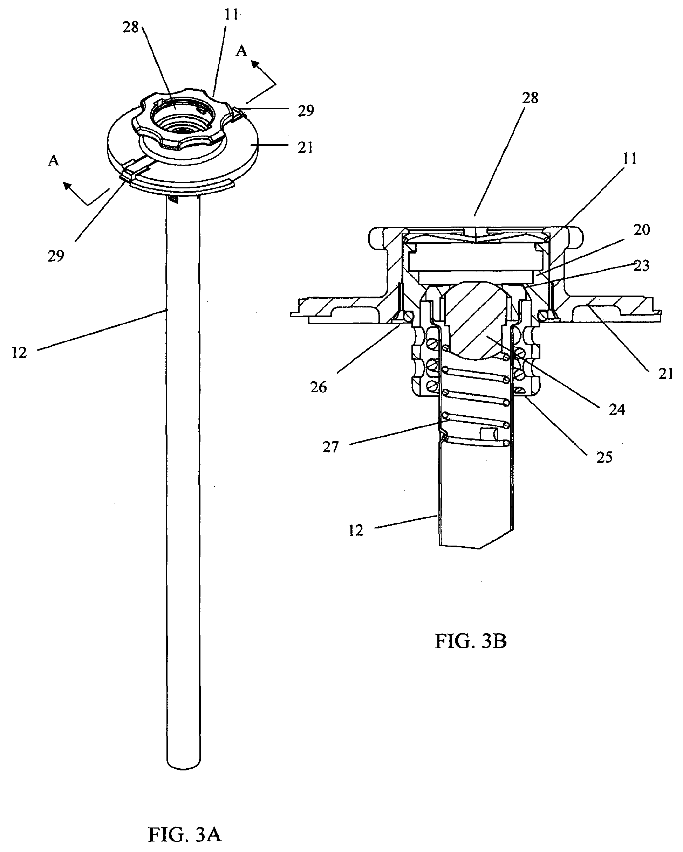

As illustrated in FIG. 2, dispenser tube assembly **10** comprises: a dispenser valve **11** that is used to regulate in the inflow and outflow of beer; an expandable and disposable bladder **13** that is illustrated in a unexpanded and axially extended configuration, forming six (6) generally uniform, longitudinal wave-like segments **13A;** and a dispenser tube **12** (shown in FIG. 3) that is disposed within the interior of bladder **13** and utilized to remove pressurized beer from the expanded bladder. Dispenser tube **12** is attached to dispenser valve **11** by connecting a top end of the dispenser tube to the interior of the dispenser valve, and bladder **13** is releasably attached to dispenser valve **11.** A more detailed description of the dispenser valve **11** and its attachment to dispenser tube **12** and bladder **13** is presented in connection with the discussion of FIG.'s 3B, 5C, 8A and 8B. As shown in FIG. 1, in order to use beer keg **1,** the dispenser tube assembly **10** is inserted into keg body **2** by disposing the assembly through keg body opening **2A** and valve attachment collar **4,** with assembly **10** concentrically positioned within the interior of keg body **2.**

FIG.'s 3A and 3B present a more detailed illustration of dispenser valve **11** and dispenser tube **12.** Dispenser valve **11** comprises an annular valve body **20,** annular bottom flange **21,** including a pair of radially extending cantilever arms **29,** annular valve seal **23,** annular valve inner seat **24,** valve outer spring **25,** an O-ring **26,** valve locking member **29,** and an inlet port **28.** Valve body **20,** valve inner seat **24,** and valve outer spring **25** are each preferably made of 316 stainless steel, and valve seal **23** and resilient O-ring **26** are each preferably made of Viton®, respectively. The top end of dispenser tube **12** is connected to the inside of valve body **20** with outer valve spring **25** disposed around the outside surface of the dispenser tube. A valve inner spring **27** is concentrically disposed within the interior of dispenser tube **12** with the bottom of the spring in contact with an annular ledge and the top of the spring is in contact with valve seat **24.** Dispenser tube **12** and inner valve spring **27** are preferably made of 316 stainless steel. The operation of the dispenser valve will be described in connection with FIG.'s 9A and 9B.

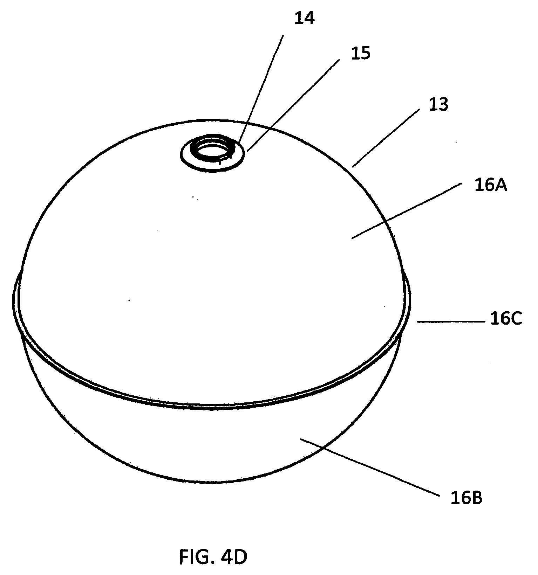

FIG.'s 4A through 4D illustrate a preferred bladder configuration. Preferably, as shown in FIG.'s 4A and 4B, the bladder comprises a top and bottom circularly shaped bladder sheet, **16A** and **16B,** with the circumferential edges of the sheets welded together forming a seam **16C,** thereby forming bladder **13** as shown in Fig. 4D. Top bladder sheet **16A** of bladder **13** also contains a circular and concentrically positioned opening through the bladder that provides access to the interior of the bladder. In the preferred embodiment, the bladder material has the characteristics of being flexible, impermeable to beer, substantially impermeable to oxygen, and substantially inert when in contact with beer. More specifically, it is preferable for the bladder material of disposable bladder **13** to comprise a multi-layer material having an inner layer of a thermoplastic material, like polyethylene, with a wall thickness of approximately 3 mils, and an outer layer of BIAX nylon with a wall thickness of approximately 0.6 mils, and with the bladder material being formed by bonding the thermoplastic and BIAX nylon layers together using an extrusion process. Optionally, the BIAX layer can be treated before the bladder material's inner and outer layers are bonded together in order to provide additional oxygen barrier properties. The bladder material can also be treated to preferably provide a bladder material having a coefficient of friction of between approximately 0.1 and approximately 0.2 by applying a low coefficient of friction substance to the outer surface of the bladder material and/or applying an embossing process to the bladder material.

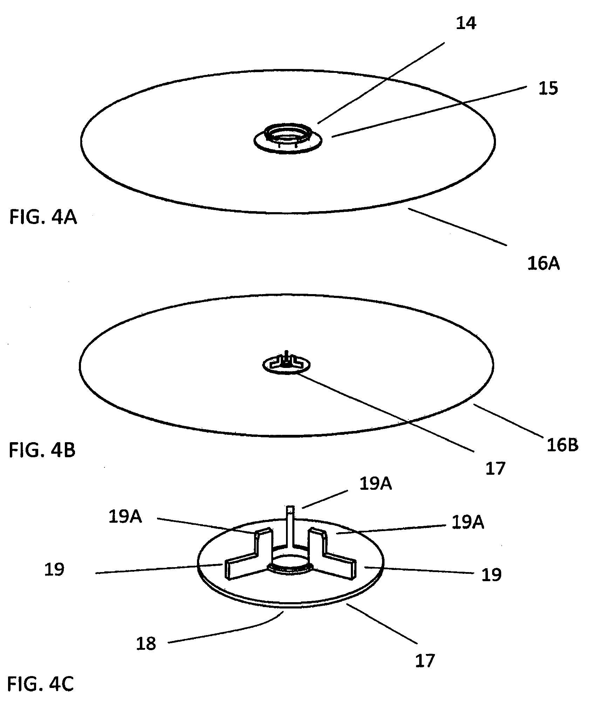

Regardless of the type of material that is used to form bladder **13,** as further illustrated in FIG. 4A, an annular member **15,** preferably made of polyethylene, is attached to the inside surface of the bladder and surrounds the bladder opening, with a cylindrically shaped annular fitment **14** integral with annular member **15** and extending through the bladder opening and extending away from the outside surface of the bladder. As will be illustrated in more detail in FIG. 5B, annular fitment **14** is utilized to releasably attach bladder **13** to dispenser valve **11.** Continuing with FIG. 4B, a centering fitment **17** is attached to the inside surface of bottom bladder sheet **16B** of bladder **13,** preferably by welding the bottom surface **18** of the centering fitment to the bladder, such that the geometric center of centering fitment **17** is concentric with the geometric center of bottom bladder sheet **16B.** In order to more clearly illustrate the structure of centering fitment **17,** FIG. 4C shows the fitment removed from the bladder. Centering fitment **17** preferably comprises three (3) evenly spaced L-shaped members **19,** with each L-shaped member having a distal end **19A.** As will be described in more detail in FIG. 5B, centering fitment is used to releasably attach bladder **13** to the bottom of dispenser tube **12.**

In order to ensure that the bladder **13** contacts the inside surface of keg body **2** when the bladder is filled with beer, the bladder must be sized such that the diameter of the circularly shaped bladder sheets is equal to or greater than a predetermined keg body dimension **(X)** measured along an inside top or bottom surface of keg body **2.** More specifically, dimension **X** can be described by passing a hypothetical vertical plane through keg body **2** such that the plane passes through and is co-extensive with the axial center line of the keg body; then by passing a hypothetical horizontal plane through keg body **2** such that the plane passes through the midsection of the keg (i.e. halfway between the keg opening **2A** and the bottom of the keg body) and is perpendicular to the axial center line of the keg body. Dimension X can then be defined, for example, by the dimension of the U-shaped line represented by the intersection of the vertical plane with the keg body below the intersection of the horizontal plane with the keg body. For the preferred 58,6l (15.5 gallon) keg, as in beer keg **1,** dimension **X** is measured to be 81,3cm (32 inches). Thus, in the preferred embodiment bladder **13** must have a diameter that is 81,3cm (32 inches) or greater. Dimension **X** can also be calculated by approximating the keg body **2** as consisting of a cylinder forming the keg body's mid-section, with spherical sections forming the keg body's top and bottom ends. In that case dimension **X** can be calculated as follows:

$$\textbf{X = length of the cylinder + (1/2 (diameter of the cylinder x 3.14)).}$$

FIG. 5A shows dispenser tube **12** after it has been partially inserted through annular member and fitment **14** and **15**, respectively, and into the interior of bladder **13,** with the bladder in an unexpanded and axially extended configuration, with the bladder forming six (6) generally uniform, longitudinal wave-like segments **13A.** The bladder **13** forms the six (6) wave-like segments when it is unexpanded and axially extended due to the fact that the bladder, as previously described, is constructed by welding together circular bladder sheets **16A** and **16B,** forming seam **16C.** And, FIG 5B illustrates the completed assembly of dispenser tube assembly **10,** with dispenser tube **12** (shown in dashed lines) completely disposed within the interior of bladder **13,** with bladder **13** releasably connected to dispenser valve **11,** with the bottom end of dispenser tube **12** releasably attached to centering fitment **17** (shown in dashed lines) by releasably engaging distal ends **19A** of L-shaped members **19** with the bottom inside surface of the dispenser tube **12,** and with the bottom end of the dispenser tube abutting the L-shaped members **19** in order to allow beer to flow up through the dispenser tube. Since the centering fitment **17** is attached to the geometric center of the bottom bladder sheet **16B,** the releasable attachment of dispenser tube **12** to centering fitment **17** ensures that bladder is evenly distributed around the dispenser tube, which in turn ensures that the bladder will expand symmetrically around the tube.

Dispenser tube assembly **10** is further illustrated in the partial cross-sectional plan view diagram of FIG. 5C, showing bladder **13** releasably and concentrically connected to dispenser valve **11** by inserting fitment **14** between resilient O-ring **25** and flange **21** of dispenser valve **11,** and with the resiliency of O-Ring **25** providing a sufficient radial force to maintain the connection between fitment **14** and flange **21** but, at the same time, allowing bladder **13** to be easily removed from the dispenser valve by applying a slight downward force on the bladder.

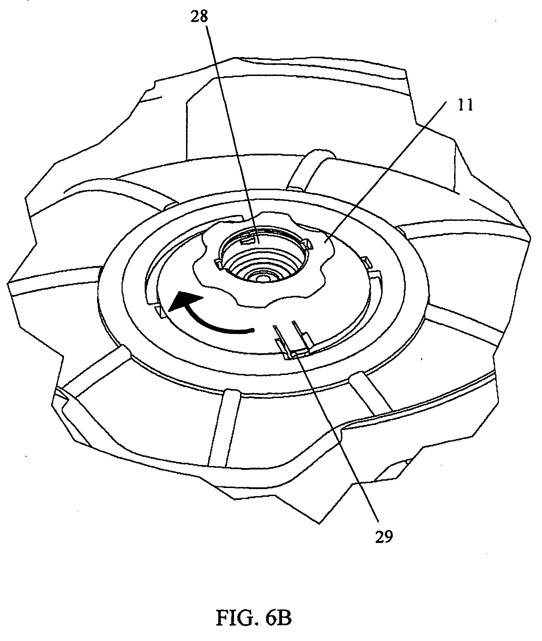

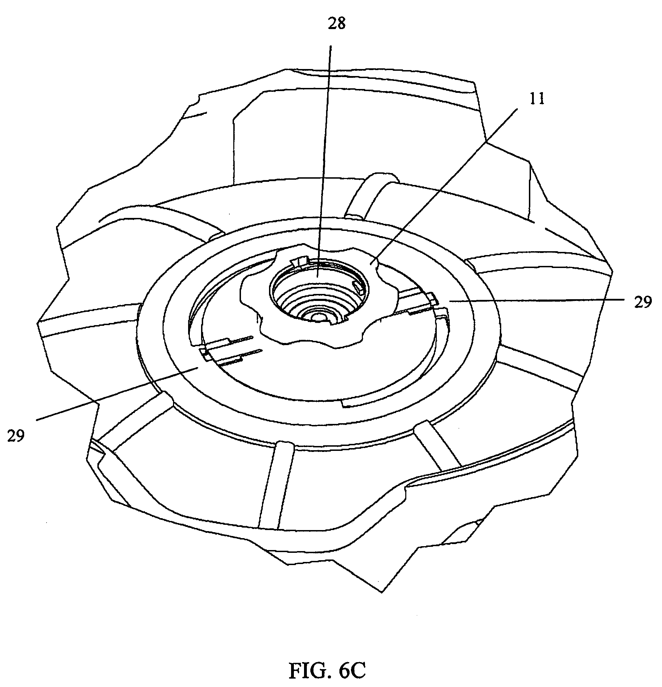

Once dispenser tube assembly **10** has been assembled, the assembly can be inserted through the opening within valve attachment collar **4** as shown in FIG.1. Then, as shown in the partial cross-sectional diagram of FIG.'s 6A through 6C and in the cross-sectional diagram of FIG.'s 8A and 8B, dispenser tube assembly **10** can be releasably connected to keg body **2** by attaching dispenser valve **11** to the valve attachment collar **4** attached to the top portion of the keg body. Two arcuate-shaped valve flange segments, integral with annular flange **21** that is integral with dispenser valve **11,** extend radially outward and away from annular flange **21,** with each flange segment extending approximately 90° around annular flange **21** and positioned such that each end of a flange segment is spaced 90° away from the end of an adjacent flange segment. A pair radially extending cantilever arms **29** is formed within annular flange **21** such that the end of each cantilever arm can flex in a vertical direction when subjected to a vertical load, with the cantilever arms positioned 180° apart and with each arm extending through a respective flange segment. Two arcuate-shaped collar flange segments, integral with the axially extending inside sidewall of collar **4,** extend radially inward, with each collar flange segment extending approximately 90° around the inside sidewall of collar **4** and positioned such that each end of a collar flange segment is spaced 90° away from the end of an adjacent collar flange segment. Each collar flange segment has a varying thickness, as measured in an axial direction parallel to the sidewall of collar **4,** with the thickness increasing in a clockwise direction along the flange segment, thereby creating a ramp-like surface on the under-side surface of each collar flange segment. Finally, a notch is formed through each collar flange segment and is positioned adjacent to the thicker end of the flange. In operation, dispenser valve **11** is releasably attached to collar **4** by inserting the valve flange segments between the collar flange segments, as shown in FIG. 6B, and rotating valve **11** in a clockwise direction, as illustrated in FIG 6C, which causes each of the valve's cantilever arms to slide along a respective collar's ramp-like surface until the pair of cantilever arms **29** engage a respective collar flange notch. When the beer has been completely dispensed from the reusable beer keg **1,** the dispenser tube assembly **10** is easily removed from keg body **2** by simply pressing down on the ends of the pair of cantilever arms, thereby releasing the arms from the collar flange notches, simultaneously rotating the dispenser valve **11** in a counterclockwise direction, and lifting the dispenser tube assembly from keg body **2.**

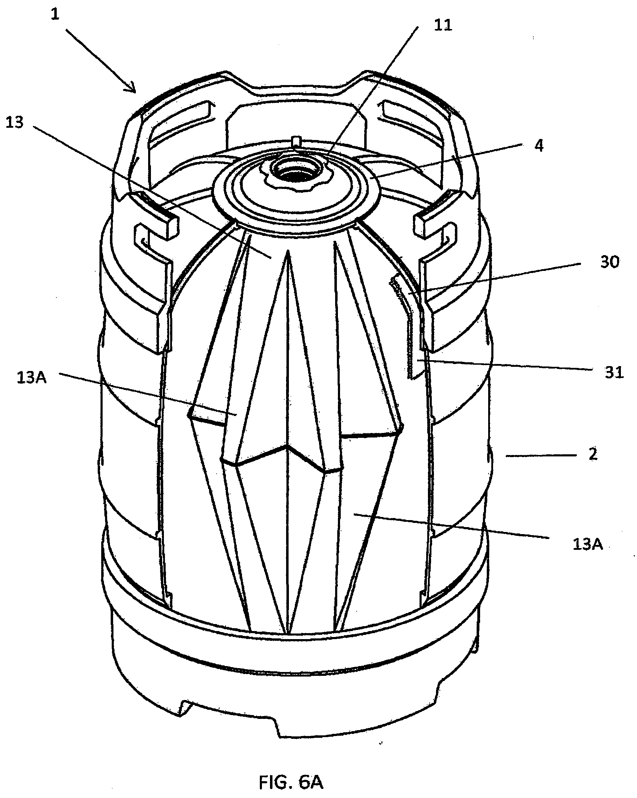

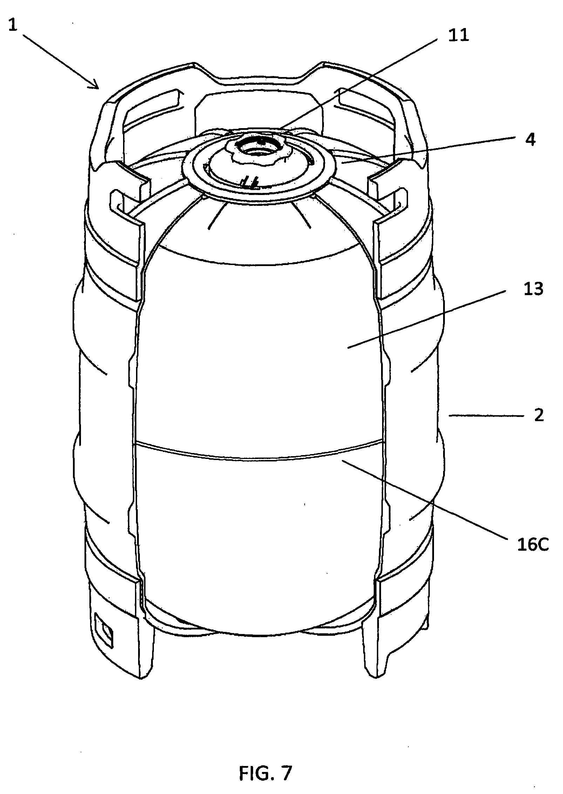

Once dispenser tube assembly has been attached to keg body **2,** as shown in FIG. 6A, the reusable beer keg **1** is ready to be filed with and dispense beer. During the operation of filling beer keg **1** with beer, beer flows through an open dispenser valve **11** and into the interior of bladder **13.** As the beer continues to flow into bladder 13, the bladder will begin to expand symmetrically around dispenser tube **12.** Further, since dispenser tube assembly **10** is concentrically positioned within the interior of keg body **2**, when the filing operation is completed, the beer will have caused bladder **13** to expand until the outside surface of the bladder contacts with the inside surface of keg body **2**, as shown in FIG. 7, in a uniformly distributed manner.

Referring now to FIG.'s 5C, 8A and 8B, a more detailed description of the operation of dispenser valve **11 is** presented. When a beer tap (not shown) is connected to the inlet port **28** of dispenser valve **11**, the tap presses on the valve body's outer annular seal **20** causing the seal and dispenser tube **12** to move in a downward direction against the force of outer valve spring **25** and to thereby open the valve by creating an valve inlet gap **A** between the valve body **20** and seal **23**. Once dispenser valve **11** is in the open configuration, pressurized beer can be delivered to the interior of bladder **13** through the valve inlet gap. And, as the beer enters bladder **13**, it causes the bladder to unfurl until outside surface of the bladder contacts substantially the entire inside surface of keg body **2**, at which point beer keg **1** has been filled with beer. In order to dispense the beer, pressurized $CO_2$ gas is supplied through the beer tap and valve inlet gap **A**. A tap spigot can then be opened, which depresses seat **24** downward against interior valve spring **27**, thereby creating a valve outlet gap **B** within the dispenser valve **11** between seat **24** and the seal **23**. Beer is then forced from the bladder up through the bottom opening of dispenser tube **12**, through the valve outlet gap **B** within dispenser valve **11**, and out of the tap spigot.

When the beer keg has been emptied, it can be returned to the brewery where dispenser tube assembly **10** is removed from keg body **2** by unlocking dispenser valve **11** from its engagement with valve attachment collar **4**. Used disposable bladder **13** can then be removed from its engagement with dispenser valve **11** by pulling on the bladder in a direction generally parallel to dispenser **tube12** in order to cause valve fitment **14** to slide out from between O-Ring **25** and flange **21** of dispenser valve **11**. Used bladder **13** is then disposed of in any appropriate manner for the recycling of plastic material generally. Dispenser valve **11** and dispenser tube **12** are then cleaned and, along with the use of a new bladder **13**, are used to reassemble dispenser tube assembly **10** as previously described. Then the reassembled dispenser tube assembly **10** is attached to the used beer keg body **2** by connecting the assembly to the keg body as described above. In this regard, there is no need to clean the used beer keg body because the beer does not come into contact with the keg body; rather the beer only contacts the interior surface of bladder **13**. The used beer keg **1** is now ready for being refilled with beer and delivered to a commercial establishment.

Now, referring back to FIG. 6A, in another embodiment a temperature sensor and display device **30**, such as thermochromatic liquid crystal temperature indicator, can be disposed within an opening through the top portion of keg body **2**. Further, a heat transfer strip **31**, preferably made of aluminum or an aluminum alloy, having a curved top portion and a straight bottom portion, can be disposed adjacent to the inside surface of keg body **2**, with the curved top portion positioned so as to contact the bottom surface of sensor and display device **30** and its straight bottom portion positioned approximately half way down the inside vertical surface of keg body **2**. When beer is supplied to the interior of disposable bladder **13**, causing the bladder to unfurl and its outside surface to contact the inside surface of keg body **2**, the outside surface of the bladder also comes into contact with heat transfer strip **31**. In this regard, the temperature of the beer when it leaves the brewery will be normally maintained at a target temperature of about 3°C (38°F). After a relatively brief period of time, the temperature of heat transfer strip **31** will become approximately equal to the temperature of the beer, and a temperature of the beer will be displayed on sensor and display device **30**, in this case it will display 3°C (38°F). As the temperature of the beer inside bladder **13** changes, the change is sensed heat transfer strip **31** and sensor and display device **30** and displayed on the device. In this manner, it can be accurately and easily determined whether the temperature of the beer in the keg has changed from its "target" temperature by simply looking at the display on temperature sensor **30**.

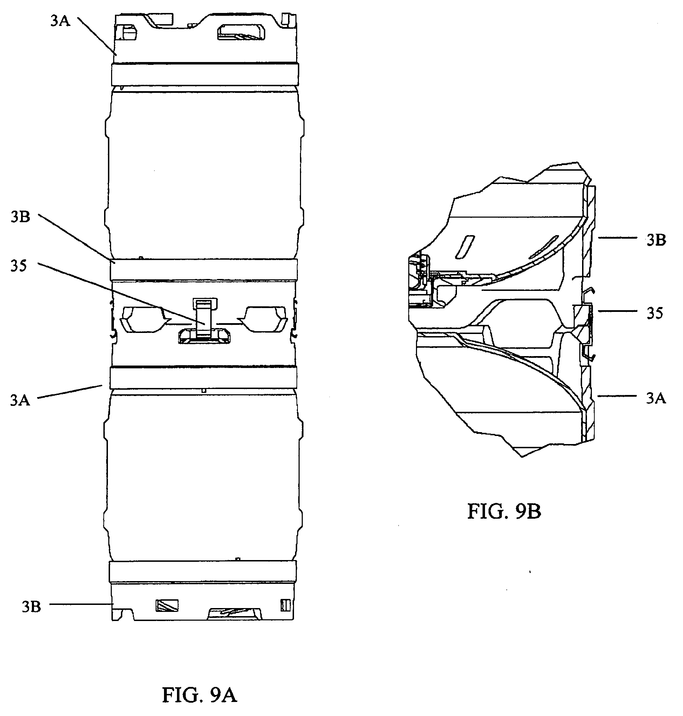

FIG. 9A and 9B illustrate that the beer kegs of the present invention can be easily stacked together and held firmly in place. A top portion of cylindrical member **3A**, attached to keg body **2**, contains four arcuate shaped axially extending flanges that are integral with cylindrical member **3A** and are equally spaced around its perimeter, with the top surface of each of the flanges being formed into a convex shape. Each flange also contains an elongate top slot that extends through the flange. Similarly, a bottom portion of cylindrical member **3B**, attached to keg body **2**, contains four arcuate shaped axially extending feet that are integral with cylindrical member **3B** and are equally spaced around its perimeter, with the bottom surface of each of the feet being formed into a concave shape. Each foot also contains an elongate bottom slot that extends through the flange. As shown in the figures, when the beer kegs are stacked on top of each other, the concave shape of the bottom surface of the feet approximately mates with the convex shape of the top surface of the top flanges, thereby providing some stability to the stack. Further stability can be provided by using a resilient strap **35**, having a hook portion on each end, with the hook portion on one end of the strap engaging with a top slot and with the hook portion on the other end of the strap engaging with a bottom slot. Similarly, one or more additional resilient straps **35** can be attached in like fashion around keg body **2**. In addition to implementing the feature of being able to further secure the stack of kegs, the top and bottom elongate slots can also be used as handholds.

Although a preferred embodiment and other embodiments have been described, it will be recognized by those skilled in the art that other embodiments and features can be provided without departing from the underlying principals of those embodiments. The scope of the invention is defined by the appended claims.

**Claims**

1.  A reusable beer keg (1), comprising:

    a hollow beer keg body (2) with the keg body having a keg opening (2A) through the keg body for providing access to the interior of the keg body;
    a dispenser valve (11);
    a dispenser tube (12) with the top end of the tube connected to the dispenser valve;
    a dispenser tube assembly (10) comprising a disposable bladder (13) having a top (16A) and bottom (16B) circularly shaped bladder sheet, with the perimeter of the top bladder sheet attached (16C) to the perimeter of the bottom bladder sheet and with the top bladder sheet having a bladder opening, with the dispenser tube disposed through the bladder opening, with the bladder opening releasably secured to the dispenser valve (11), and with the bottom end of the dispenser tube (12) extending into the interior of the disposable bladder (13) and being releasably attached to the inside surface of the bottom bladder sheet;
    whereby the dispenser tube assembly can be disposed through the keg opening, with the dispenser valve (11) releasably attached to the keg body, and the dispenser valve (11) is adapted to be operated to supply beer to the interior of the disposable bladder (13)
    **characterised in that** the disposable bladder (13) forming six longitudinal wave-like segments (13A) ; and **in that** the dispenser valve is adapted to be operated to supply gas pressure to the interior of the disposable bladder (13), causing the beer to flow through the dispenser tube and dispenser valve (11).

2.  The reusable beer keg of claim 1 in which the disposable bladder also comprises a centering fitment (17) attached to the bladder, whereby the centering fitment can be utilized to releasably attach the bottom end of the dispenser tube to the inside surface of the bottom bladder sheet.

3.  The reusable beer keg of any preceding claim in which the keg body is a one-piece plastic unit.

4.  The reusable beer keg of any preceding claim in which the disposable bladder is flexible, impermeable to beer, substantially impermeable to oxygen, and substantially inert when in contact with beer.

5.  The reusable beer keg of any preceding claim also comprising a temperature sensor (30) that is attached to the keg body and a heat transfer strip (31) that is in communication with the temperature sensor and disposed adjacent to the keg body.

6.  A method for using the reusable beer keg (1) of claim 1, comprising the steps of:

    a) providing a hollow beer keg body (2) with the keg body having a keg opening (2A) for providing access to the interior of the keg body;
    b) assembling a dispenser tube assembly (10) by attaching a dispenser valve (11) to an end of a dispenser tube (12), disposing an opposite end of the dispenser tube through an opening of a disposable bladder (13), and releasably attaching said other end of said dispenser tube to the disposable bladder;
    c) disposing the dispenser tube assembly through the keg body opening and releasably attaching the dispenser valve to the keg opening, thereby creating the reusable beer keg;
    d) dispensing beer into the interior of the bladder;
    e) dispensing pressurized gas into the interior of the bladder, causing the beer to flow up through the dispenser tube;
    f) disassembling the reusable beer keg after it has dispensed the beer by releasing the dispenser valve from its engagement with the keg body, removing the dispenser tube assembly from the interior of the keg body, and releasing the bladder from its engagement with the dispenser valve;
    g) disposing of the disposable bladder;
    h) cleaning the dispenser valve and dispenser tube; and
    i) reassembling the reusable beer keg as in steps (b) and (c) above by reusing the keg body, cleaned dispenser valve and dispenser tube, and using a new disposable bladder.

**Patentansprüche**

1.  Wiederverwendbares Bierfass (1), umfassend:

einen hohlen Bierfasskörper (2), wobei der Fasskörper eine Fassöffnung (2A) durch den Fasskörper zum Bereitstellen eines Zugangs zu dem Inneren des Fasskörpers aufweist;

ein Abgabeventil (11);

eine Abgabeleitung (12), wobei das obere Ende der Leitung mit dem Abgabeventil verbunden ist;

eine Abgabeleitungsanordnung (10), umfassend eine Einwegblase (13) mit einem oberen (16A) und einem unteren (16B) kreisförmigen Blasenblatt, wobei der Umfang des oberen Blasenblatts an dem Umfang des unteren Blasenblatts angebracht ist (16C), und wobei das obere Blasenblatt eine Blasenöffnung aufweist, wobei die Abgabeleitung durch die Blasenöffnung angeordnet ist, wobei die Blasenöffnung an dem Abgabeventil (11) lösbar gesichert ist, und

wobei sich das untere Ende der Abgabeleitung (12) in das Innere der Einwegblase (13) erstreckt und lösbar an der inneren Fläche des unteren Blasenblatts angebracht ist;

wobei die Abgabeleitungsanordnung durch die Fassöffnung angeordnet werden kann, wobei das Abgabeventil (11) an dem Fasskörper lösbar angebracht ist und das Abgabeventil (11) dazu eingerichtet ist, bedienbar zu sein, um Bier in das Innere der Einwegblase (13) zu liefern,

**dadurch gekennzeichnet, dass** die Einwegblase (13) sechs längliche wellenförmige Segmente (13A) ausbildet; und dass das Abgabeventil dazu eingerichtet ist, bedienbar zu sein, um einen Gasdruck an das Innere der Einwegblase (13) zu liefern, wodurch das Bier veranlasst wird, durch die Abgabeleitung und das Abgabeventil (11) zu strömen.

2. Wiederverwendbares Bierfass nach Anspruch 1, wobei die Einwegblase auch ein zentrierendes Einpasselement (17) umfasst, welches an der Blase angebracht ist, wobei das zentrierende Einpasselement verwendet werden kann, um das untere Ende der Abgabeleitung an der inneren Fläche des unteren Blasenblatts lösbar anzubringen.

3. Wiederverwendbares Bierfass nach einem der vorhergehenden Ansprüche, wobei der Fasskörper eine einstückige Kunststoffeinheit ist.

4. Wiederverwendbares Bierfass nach einem der vorhergehenden Ansprüche, wobei die Einwegblase flexibel, undurchlässig für Bier, im Wesentlichen undurchlässig für Sauerstoff und im Wesentlichen inert, wenn in Kontakt mit Bier, ist.

5. Wiederverwendbares Bierfass nach einem der vorhergehenden Ansprüche, ferner umfassend einen Temperatursensor (30), welcher an dem Fasskörper angebracht ist, und einen Wärmetransferstreifen (31), welcher mit dem Temperatursensor in Verbindung steht und dem Fasskörper benachbart angeordnet ist.

6. Verfahren zum Verwenden des wiederverwendbaren Bierfasses (1) nach Anspruch 1, umfassend die Schritte:

a) Bereitstellen eines hohlen Bierfasskörpers (2), wobei der Fasskörper eine Fassöffnung (2A) zum Bereitstellen eines Zugangs zu dem Inneren des Fasskörpers aufweist;

b) Zusammenbauen einer Abgabeleitungsanordnung (10) durch Anbringen eines Abgabeventils (11) an einem Ende einer Abgabeleitung (12), Anordnen eines entgegengesetzten Endes der Abgabeleitung durch eine Öffnung einer Einwegblase (13) und lösbares Anbringen des anderen Endes der Abgabeleitung an der Einwegblase;

c) Anordnen der Abgabeleitungsanordnung durch die Fasskörperöffnung und lösbares Anbringen des Abgabeventils an der Fassöffnung, um dadurch das wiederverwendbare Bierfass zu erzeugen;

d) Abgeben von Bier in das Innere der Blase;

e) Abgeben von unter Druck stehendem Gas in das Innere der Blase, wobei das Bier veranlasst wird, durch die Abgabeleitung nach oben zu strömen;

f) Auseinanderbauen des wiederverwendbaren Bierfasses, nachdem es das Bier abgegeben hat, durch Freigeben des Abgabeventils von dessen Eingriff mit dem Fasskörper, Entfernen der Abgabeleitungsanordnung von dem Inneren des Fasskörpers und Freigeben der Blase von ihrem Eingriff mit dem Abgabeventil;

g) Entsorgen der Einwegblase;

h) Reinigen des Abgabeventils und der Abgabeleitung; und

i) Erneutes Zusammenbauen des wiederverwendbaren Bierfasses wie in den obigen Schritten (b) und (c) durch Wiederverwenden des Fasskörpers, des gereinigten Abgabeventils und der gereinigten Abgabeleitung und Verwenden einer neuen Einwegblase.

**Revendications**

1. Tonnelet de bière réutilisable, comprenant :

   un corps de tonnelet de bière creux (2) avec le corps de tonnelet ayant une ouverture de tonnelet (2A) à travers le corps de tonnelet pour donner l'accès à la partie interne du corps de tonnelet ;
   une soupape de distribution (11) ;
   un tube de distribution (12) avec l'extrémité supérieure du tube reliée à la soupape de distribution ;
   un ensemble tube de distribution (10) comprenant une vessie jetable (13) ayant des feuilles de vessie en forme circulaire supérieure (16A) et inférieure (16B), avec le périmètre de la feuille de vessie supérieure (16C) étant attaché au périmètre de la feuille de vessie inférieure et avec la feuille de vessie supérieure ayant une ouverture de vessie, avec le tube de distribution disposé à travers l'ouverture de vessie, avec l'ouverture de vessie fixée de manière amovible à la soupape de distribution (11), et avec l'extrémité inférieure du tube de distribution (12) s'étendant dans la partie interne de la vessie jetable (13) et étant attachée de manière amovible à la surface intérieure de la feuille de vessie inférieure ;
   moyennant quoi l'ensemble tube de distribution peut être disposé à travers l'ouverture de tonnelet, avec la soupape de distribution (11) attachée de manière amovible au corps de tonnelet, et la soupape de distribution (11) est adaptée pour être actionnée afin d'alimenter la partie interne de la vessie jetable (13) en bière.
   **caractérisé en ce que** la vessie jetable (13) formant six segments longitudinaux de type ondulé (13A) ; et **en ce que** la soupape de distribution est adaptée pour être actionnée afin d'alimenter la partie interne de la vessie jetable (13) en pression de gaz, entraînant l'écoulement de la bière à travers le tube de distribution et la soupape de distribution (11).

2. Tonnelet de bière réutilisable de la revendication 1, dans lequel la vessie jetable comprend également une douille de centrage (17) attachée à la vessie, moyennant quoi la douille de centrage peut être utilisée pour attacher de manière amovible l'extrémité inférieure du tube de distribution à la surface intérieure de la feuille de vessie inférieure.

3. Tonnelet de bière réutilisable de l'une des revendications précédentes, dans lequel le corps de tonnelet est une unité monobloc en plastique.

4. Tonnelet de bière réutilisable de l'une des revendications précédentes, dans lequel la vessie jetable est souple, imperméable à la bière, sensiblement imperméable à l'oxygène, et sensiblement inerte lorsqu'elle est en contact avec la bière.

5. Tonnelet de bière réutilisable de l'une des revendications précédentes, comprenant également un capteur de température (30) qui est attaché au corps de tonnelet et une bande de transfert thermique (31) qui est en communication avec le capteur de température et disposée de manière adjacente au corps de tonnelet.

6. Procédé pour utiliser le tonnelet de bière réutilisable (1) de la revendication 1, comprenant les étapes qui consistent :

   a) à fournir un corps de tonnelet de bière creux (2) avec le corps de tonnelet ayant une ouverture de tonnelet (2A) pour donner l'accès à la partie interne du corps de tonnelet ;
   b) à assembler un ensemble tube de distribution (10) en attachant une soupape de distribution (11) à une extrémité d'un tube de distribution (12), en disposant une extrémité opposée du tube de distribution à travers une ouverture d'une vessie jetable (13), et en attachant de manière amovible ladite autre extrémité dudit tube de distribution à la vessie jetable ;
   c) à disposer l'ensemble tube de distribution à travers l'ouverture de corps de tonnelet et à attacher de manière amovible la soupape de distribution à l'ouverture de tonnelet, ce qui permet de créer le tonnelet de bière réutilisable ;
   d) à distribuer la bière dans la partie interne de la vessie ;
   e) à distribuer un gaz sous pression dans la partie interne de la vessie, entraînant l'écoulement de la bière vers le haut à travers le tube de distribution ;
   f) à démonter le tonnelet de bière réutilisable après avoir distribué la bière par libération de la soupape de distribution de son engagement avec le corps de tonnelet, par retrait de l'ensemble tube de distribution de la partie interne du corps de tonnelet, et par libération de la vessie de son engagement avec la soupape de distribution ;
   g) à jeter la vessie jetable ;
   h) à nettoyer la soupape de distribution et le tube de distribution ; et

i) à assembler à nouveau le tonnelet de bière réutilisable comme dans les étapes (b) et (c) ci-dessus par réutilisation du corps de tonnelet, de la soupape de distribution et du tube de distribution nettoyés, et en utilisant une nouvelle vessie jetable.

1

10

2A

4

3A

3A

3B

FIG. 1

FIG. 2

FIG. 3A

FIG. 3B

**14**

**15**

FIG. 4A

**16A**

FIG. 4B

**16B**

**17**

**19A**

**19A**

**19A**

**19**

**19**

**18**

**17**

FIG. 4C

FIG. 4D

FIG. 5A

FIG. 5B

FIG. 5C

FIG. 6A

FIG. 6B

FIG. 6C

FIG. 7

FIG. 8A

FIG. 8B

3A

3B

35

3A

3B

FIG. 9A

3B

35

3A

FIG. 9B

**EP 2 583 934 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6666358 B
- FR 2952357 A